# EUROPÄISCHE PATENTANMELDUNG

(11) **EP 1 762 595 A1**
(43) Veröffentlichungstag der Anmeldung: **14.03.2007**
(21) Anmeldenummer: 06018546.9
(22) Anmeldetag: 05.09.2006
(51) Int. Cl.: C09D 4/06, C09D 133/12

(54) **Lichthärtendes Beschichtungsmaterial, besonders für nicht sichtbaren Schutz für Metalloberflächen, und ein Verfahren zum Beschichten**

(30) Priorität: 13.09.2005 DE 102005043853
(71) Anmelder: Heraeus Kulzer GmbH, 63450 Hanau (DE)
(72) Erfinder: Eppinger, Bernhard, 35781 Weilburg (DE)
(74) Vertreter: Kühn, Hans-Christian

(57) **Zusammenfassung**

Es wird ein lichthärtendes Beschichtungsmaterial enthaltend eine Lösung eines Polymers, eines Monomers und eines Photoinitiator-Systems in einem leichtflüchtigen Lösungsmittel, beschrieben, das sich besonders zur Herstellung von dünnen, nicht sichtbaren Schutz-Beschichtungen auf Metalloberflächen eignet.

## Beschreibung

Die Erfindung betrifft lichthärtendes Beschichtungsmaterial, besonders für nicht sichtbaren Schutz für Metalloberflächen, und ein Verfahren zum Beschichten von Metalloberflächen.

Metalloberflächen von z.B. Kupfer, Silber, Nickel oder Messing neigen zum Anlaufen oder zur Korrosion. Sie werden daher häufig mit transparenten Schutzlacken überzogen. Als solche kommen auch lichthärtende Beschichtungsmaterialien in Frage.

Es ist bekannt, dass bei lichthärtenden Beschichtungsmaterialien durch den Luftsauerstoff auf der Oberfläche eine meist klebrige Inhibitionsschicht verbleibt, die entweder anschließend entfernt werden muss oder durch ein Abdeckmittel (Folie) oder durch Polymerisation unter Schutzgas verhindert werden kann. Ferner hat sich gezeigt, dass diese Schichten in der Regel dicker als nötig sind.

Aufgabe war es demgegenüber, die Inhibitionsschicht auf einfache Weise zu vermeiden und dünnere Schichten zu erhalten.

Die Aufgabe wird durch ein Beschichtungsmaterial nach Anspruch 1 und ein Verfahren nach Anspruch 6 gelöst. Vorteilhafte Ausführungsformen des Materials bzw. des Verfahrens sind den weiteren Ansprüche zu entnehmen.

Durch die Verwendung eines gelösten Polymers in einem geeigneten, flüchtigen Lösungsmittel unter Zusatz hochvernetzender Monomere und eines Photoinitiator-Systems wird auf der Oberfläche eine sehr dünne Schicht erzeugt. Durch die Verdampfung des Lösungsmittels wird sofort eine luftdichte Deckschicht erzeugt. Unter dieser Schicht kann dann die Lichtpolymerisation ohne Einfluss des Luftsauerstoffs stattfinden.

Das Beschichtungsmaterial enthält als Hauptbestandteil eine Lösung eines Polymers, eines Monomers und einem Photoinitiator in einem leichtflüchtigen Lösungsmittel.

Die trockene Oberfläche entsteht durch die Verdunstung des Lösungsmittels.

Die Bildung der oben beschriebenen Inhibitionsschicht wird dadurch verhindert, dass die Polymerisation (Vernetzung) im Innern des vorgetrockneten Materials unter Ausschluss von Sauerstoff erfolgt.

Die Vortrockenzeiten liegen zwischen 5 und 20 Sekunden an normaler Luft.

Die Vorteile der erfindungsgemäßen Beschichtungsmethode sind z.B. folgende:
■ Es können sehr dünne Schichten erzeugt werden. Bei herkömmlichen Lackbeschichtungen beträgt die Lackschichtstärke zwischen 50 und 500 µm.
■ Die Festigkeit gegen Abrieb ist herkömmlichem Lack gleichwertig oder überlegen.

Als Lösungsmittel kommen flüchtige organische Lösungsmittel in Betracht. Bevorzugt sind Essigsäureethylester, Essigsäuremethylester, Essigsäurebutylester, Ethyl-methylketon oder Aceton, besonders bevorzugt Aceton.

Als Polymere eignen sich in solchen Lösungsmitteln lösliche Polymere. Bevorzugt ist die Verwendung von unvernetztem Polymethylmethacrylat (PMMA).

Als Monomer/Vernetzer kommen vor allem bi-, tri- und mehrfunktionelle Vernetzer in Frage. Als besonders geeignet erwiesen sich
TMPTA = Trimethylolpropantriacrylat
TRIM = Trimethylolpropantrimethacrylat
SR 295 = RTT 190 = Pentaerythritol-tetraacrylat
Urethandimethacrylat
TEDMA = Triethylenglykoldimethacrylat

Als Bestandteile des Photoinitator-Systems kommen auf dem Gebiet übliche in Frage, wie etwa Benzoin, Benzil, Benzophenon, die Benzoinalkylenether, Ester von Phenylglyoxylsäure, alpha - Trichloracetophenon, alpha -Diethoxyacetophenon, alpha - Hydroxyacetophenone, Benzildimethylketal, Methylbenzoylformate, 1-Benzoylcyclohexanon, alpha -Aminoacetophenon, D,L- Camphrchinon, 2,2-Diethoxyacetophenon, N-Mehtyldiethanolamin, 4-Benzoyl-4'-methyldiphenylsulfid, Isopropylthioxanthon, Ethyl-4-dimethylaminobenzoat, N-Methyldiethanolamin, 1-Hydroxy-cyclohexyl-phenyl-keton, Bis(2,4,6-trimethylbenzoyl)-phosphinoxid, 2-Methyl-1-[4- (methylthio)phenyl]-2-morpholinopropanon, 1, 2-Hydroxy-2-methyl-1-phenyl-propan-1-on, Bis(2,6-dimethoxybenzoyl)-2,4,4- trimethylphenylphosphinoxid, 1-(4-(2-Hydroxyethoxy)-phenyl]-2- hydroxy-2-methyl-1-propan-1-on, [2-hydroxy-2-methyl-1-[4-(1- methylvinyl)phenyl]-propanon, 2,4,6-Trimethylbenzoylphenylphosphinsäureethylester oder Diphenyl(2,4,6- trimethylbenzoyl)phosphinoxid in Frage.

Bevorzugt sind Triacylphosphinoxide, ggf. zusammen mit weiteren Photoinitiatoren wie Campherchinon.

Zusätzlich können weitere für Beschichtungsmittel gebräuchliche Zusätze enthalten sein, die optional in Mengen 0 bis 20 Gew.-%, insbesondere von 0-10 Gew.-% vorliegen.

Beispiele für derartige Stoffe sind Verlaufsmittel, Weichmacher (z. B. Extender, wie Talkum, Schwerspat, Aluminiumsilikat, Dolomit, Entschäumer und filmbildende Hilfsmittel, z. B. Cellulose-Derivate, Mattierungsmittel in üblichen Mengen) sowie insbesondere Haftvermittler.Als Haftvermittler werden dabei Alkoxysilane, wie beispielsweise N- beta -Aminoethyl-, - Aminopropyltrimethoxysilan, -Aminopropyltrimethoxysilan, N-Methyl- beta - aminopropyltrimethoxysilan oder triaminomodifiziertes Propyltrimethoxysilan (z. B. Haftvermittler DYNASLYAN TM , "Typ TRIAMO", Handelsprodukt der Dynamit Nobel Chemie) eingesetzt. Weitere oberflächenaktive Substanzen, mit deren Hilfe die Oberflächenspannung der Beschichtungsformulierung reguliert und gute Auftragseigenschaften erreicht werden können, sind gemäss der EP 0 035 272 z.B. Silikone, wie verschiedene Polymethylsiloxane-Typen, besonders in Konzentrationen von 0,0001 bis 2 Gew.-%.

Als zusätzliche Haftvermittler können 0 bis 10, vorzugsweise 2 bis 5 Gew.-% eines carboxyfunktionellen (Meth)acrylsäureesters verwendet werden. Beispiele sind beta - carboxyethylacrylat und EBECRYL 169 oder 170 zu beziehen über UCB, S.A., Drogenbos, Belgien.
Ein weiteres, sehr gebräuchliches Additiv sind UV-Absorber, die in Konzentrationen von z.B. 0,2 bis 20 Gew.-%, vorzugsweise von 2 bis 8 Gew.-% enthalten sein können. UV-Absorber können z.B. aus der Gruppe der Hydroxybenzotriazole, Triazine und Hydroxybenzophenone ausgewählt werden (siehe z.B. EP 247 480). Ferner können Antioxidantien und Lichtschutzmittel wie z.B. Phenole wie BHT oder sterisch gehinderte Amine enthalten sein.

Die Erfindung wird anhand der folgenden Beispiele näher erläutert.

### Beispiel A: Richtrezeptur:

100 g Aceton (2-Propanon)
3 g PMMA (unvernetztes Polymer)
0,5 g TMPTA (Trimethylopropan-triacrylat)/Vernetzer)
0,004 g Luzirin TPO (Photoinitiator)
0,003 g DL-Camperchinon (Photoinitiator)

Folgende Varianten wurden getestet:
1. Anstelle von Aceton erwiesen sich Essigsäureethylester, Essigsäuremethylester, Essigsäurebutylester und Ethylmethylketon als geeignet.
2. Die Konzentration des PMMA wurde ab 1 % in ein-Prozentschritten bis 12 % variiert. Bei höheren Konzentrationen ist die Lösung zu dickflüssig um bei Raumtemperatur noch verarbeitbar zu sein.
3. Als Vernetzer wurden bi-, tri- und mehrfunktionelle Vernetzer getestet. Als geeignet erwiesen sich
   TMPTA = Trimethylolpropantriacrylat
   TRIM = Trimethylolpropantrimethacrylat
   SR 295 = RTT 190 = Pentaerythritol-tetraacrylat
   Urethandimethacrylat
   TEDMA = Triethylenglykoldimethacrylat
4. Variationen in der Konzentration der beiden Photoinitiatoren bzw. jedes einzelnen Photoinitiators sind bei der oben angegebenen Rezeptur möglich.
   Zur Polymerisation wurden drei Lichtarten getestet: UV-Licht, Mischlicht und sichtbares Licht (Blaulicht).

### Beispiel 1:

Hochglanzpolierte Silberringe wurden in die Lösung eingetaucht oder mit der Lösung bepinselt, kurz getrocknet (5 - 30 Sekunden), danach auf Trockenheit geprüft
und anschließend 10 Minuten in den jeweiligen Lichtpolymerisationsgeräten vernetzt.
Die so beschichteten Teile wurden 6 Wochen auf dem Fensterbrett im Vergleich zu den unbeschichteten Teilen der Witterung ausgesetzt.

### Beispiel 2:

Hochglanzpolierte Kupferstäbe wurden zur Hälfte in die Lösung eingetaucht oder mit der Lösung bepinselt, kurz getrocknet (5 - 30 Sekunden), danach auf Trockenheit geprüft
und anschließend 10 Minuten in den jeweiligen Lichtpolymerisationsgeräten vernetzt.

Die so beschichteten Stäbe wurden 6 Wochen auf dem Fensterbrett im Vergleich zu den unbeschichteten Teilen der Witterung ausgesetzt.

### Beispiel 3

Hochglänzende Silberbleche wurden in die Lösung eingetaucht oder mit der Lösung bepinselt, kurz getrocknet (5 - 30 Sekunden), danach auf Trockenheit geprüft
und anschließend 10 Minuten in den jeweiligen Lichtpolymerisationsgeräten vernetzt.

Die so beschichteten Teile wurden 6 Wochen auf dem Fensterbrett im Vergleich zu den unbeschichteten Teilen der Witterung ausgesetzt.

### Beispiel 4

Gleichartige Versuche wie in den Beispielen 1-3 wurden auch mit mehrmals beschichteten Teilen (2-4 mal) durchgeführt.

### Beispiel 5

Beschichtung nach dem Tauchverfahren von hochglänzenden Silbermünzen. Auch diese zeigen keinerlei Verfärbung mehr, nachdem sie jeder Labormitarbeiter täglich 5 Mal mit der bloßen Hand anfassen musste, über einen Zeitraum von 4 Wochen. Ergebnis: Die beschichteten Teile zeigten keinerlei Verfärbung, während die unbeschichteten Teile schwarz und unansehnlich wurden.

## Patentansprüche

1. Lichthärtendes Beschichtungsmaterial, enthaltend eine Lösung eines Polymers, eines Monomers und eines Photoinitiator-Systems in einem leichtflüchtigen Lösungsmittel.

2. Beschichtungsmaterial nach Anspruch 1, wobei das Lösungsmittel Aceton ist.

3. Beschichtungsmaterial nach einem der vorstehenden Ansprüche, wobei das Polymer unvernetztes PMMA ist.

4. Beschichtungsmaterial nach einem der vorstehenden Ansprüche, wobei das Monomer der Gruppe bestehend aus
TMPTA = Trimethylolpropantriacrylat,
TRIM = Trimethylolpropantrimethacrylat,
SR 295 = RTT 190 = Pentaerythritol-tetraacrylat ,
UDMA = Urethandimethacrylat (Additionsprodukt aus 2-Hydroxyethylmethacrylat und 2,2,4-Hexamethylendiisocyanat), und
TEDMA = Triethylenglykoldimethacrylat
angehört.

5. Beschichtungsmaterial nach einem der vorstehenden Ansprüche, wobei das Photoinitiator-System ein Triacylphosphinoxid und Campherchinon enthält.

6. Verfahren zur Herstellung von Beschichtungen auf Metalloberflächen, mit den Schritten
A Bereitstellen eines Beschichtungsmaterials nach einem der vorstehenden Ansprüche,
B Aufbringen der Lösung auf die Metalloberfläche,
C zumindest teilweise Verdunstung des Lösungsmittels, im folgenden Vortrocknung
D Belichten der Metalloberfläche.

7. Verfahren nach Anspruch 6, bei dem in Schritt C die Vortrocknung 5 bis 20 Sekunden lang an Luft erfolgt.

8. Beschichtung, hergestellt nach einem Verfahren nach einem der vorstehenden Ansprüche, deren Schichtdicke 1- 40 µm beträgt.

9. Beschichtung, hergestellt nach einem Verfahren nach den vorstehenden Ansprüchen, deren Schichtdicke 1-10 µm beträgt.
